(19) Europäisches Patentamt
European Patent Office
Office européen des brevets

(11) **EP 1 241 358 B1**

(12) **FASCICULE DE BREVET EUROPEEN**

(45) Date de publication et mention de la délivrance du brevet:
**16.12.2009 Bulletin 2009/51**

(51) Int Cl.:
**F04D 25/16** *(2006.01)*        **F01P 7/04** *(2006.01)*
**F04D 27/02** *(2006.01)*

(21) Numéro de dépôt: **02290609.3**

(22) Date de dépôt: **11.03.2002**

(54) **Ensemble de ventilation pour véhicule automobile à variation de puissance continue**

Lüftereinheit für ein Kraftfahrzeug mit stufenloser Leistungsvariation

Ventilation unit for motor vehicle with continuous power variation

(84) Etats contractants désignés:
**DE ES FR GB IT SE**

(30) Priorité: **12.03.2001 FR 0103337**

(43) Date de publication de la demande:
**18.09.2002 Bulletin 2002/38**

(73) Titulaire: **Faurecia Cooling Systems**
**92000 Nanterre (FR)**

(72) Inventeurs:
• **Poutot, Laurent**
**25490 Dampierre les Bois (FR)**
• **Lucbernet, Bruno**
**25230 Seloncourt (FR)**

(74) Mandataire: **Jacobson, Claude**
**Cabinet Lavoix**
**2, place d'Estienne d'Orves**
**75441 Paris Cedex 09 (FR)**

(56) Documents cités:
**GB-A- 1 554 695     US-A- 5 483 927**
**US-A- 5 901 672     US-A- 5 947 189**

## Description

L'invention se rapporte à un ensemble de ventilation pour véhicule automobile.

La plupart des véhicules sont équipés d'un ensemble de ventilation qui comprend un groupe moto-ventilateur unique destiné au refroidissement du bloc moteur. Cependant, certains véhicules doivent disposer d'une importante puissance aéraulique de refroidissement, ce qui impose l'utilisation de deux groupes moto-ventilateurs, tels que notamment décrits dans US-A-5, 483, 927, qui est considéré comme étant l'état de la technique le plus proche.

On connaît déjà des ensembles de ventilation pour véhicule automobile comprenant des premier et deuxième groupes moto-ventilateurs à alimentation électrique présentant chacun une puissance maximale de fonctionnement respective, et un dispositif de commande adapté pour faire varier la puissance aéraulique développée par l'ensemble formé par les deux groupes moto-ventilateurs en fonction d'une valeur de consigne de puissance totale.

Dans ces ensembles de ventilation connus, la commande des deux groupes moto-ventilateurs est réalisée soit de façon discontinue, les groupes moto-ventilateurs étant alimentés via des circuits résistifs commutés, soit de façon continue, auquel cas il est prévu d'utiliser un dispositif électronique de variation de puissance pour chaque groupe moto-ventilateur ou de n'utiliser qu'un seul dispositif électronique de variation de puissance en branchant les deux groupes moto-ventilateurs en parallèle.

Dans le cas d'une commande discontinue, on ne peut accéder qu'à un nombre limité de vitesses et donc de puissances aérauliques.

Dans le cas d'une commande à variation continue de type connu, l'utilisation de deux dispositifs électroniques de variation de puissance génère un surcoût important qui n'est généralement pas compatible avec les niveaux de prix recherchés dans l'industrie automobile.

D'autre part, l'association en parallèle de deux groupes moto-ventilateurs commandés par un variateur électronique unique pose des problèmes vibro-acoustiques dus au battement dès lors que les deux groupes moto-ventilateurs sont quasi-identiques. Quels que soient les groupes moto-ventilateurs utilisés, il se pose également des problèmes de rayonnement électro-magnétique dû à l'utilisation, par les variateurs électroniques, de courant haché- de rapport cyclique variable à haute fréquence. Le transport de ce courant entre les deux groupes moto-ventilateurs impose par conséquent l'utilisation de dispositifs de blindage ou de filtrage.

Un but principal de l'invention est de proposer un ensemble de ventilation à deux groupes moto-ventilateurs dont la puissance totale est commandée de façon variable en continu, qui remédie aux inconvénients précités.

A cet effet, suivant l'invention, le dispositif de commande comporte un variateur de puissance électrique à variation de puissance continue, relié au premier groupe moto-ventilateur, et un moyen d'interruption d'alimentation du deuxième groupe moto-ventilateur, la puissance développée par ledit deuxième groupe moto-ventilateur étant soit nulle soit égale à sa puissance maximale de fonctionnement.

Suivant d'autres caractéristiques de l'invention :

- le dispositif de commande comporte un organe électronique de calcul qui reçoit en entrée un signal de consigne d'entrée significatif de la puissance aéraulique totale de consigne, et délivre en sortie, d'une part un signal de consigne de sortie au variateur, significatif de la puissance aéraulique de consigne du premier groupe moto-ventilateur, et d'autre part un signal de commande au moyen d'interruption, significatif de l'état de consigne du deuxième groupe moto-ventilateur, la somme de la puissance de consigne du premier groupe moto-ventilateur et de la puissance développée par le deuxième groupe moto-ventilateur étant égale à la puissance totale de consigne ;

- sur une plage de fonctionnement à bas régime, correspondant à des valeurs de puissance totale de consigne inférieures à une première valeur de seuil prédéterminée, la puissance de consigne du premier groupe moto-ventilateur est égale à la puissance totale de consigne, tandis que le signal de commande du moyen d'interruption est un signal de coupure, la puissance maximale de fonctionnement du premier groupe moto-ventilateur étant supérieure à la puissance aéraulique correspondant à la première valeur de seuil;

- sur une plage de fonctionnement à haut régime, correspondant à des valeurs de puissance totale de consigne supérieures à une deuxième valeur de seuil prédéterminée, le signal de commande du moyen d'interruption est un signal d'alimentation, tandis que la puissance de consigne du premier groupe moto-ventilateur est égale à la puissance totale de consigne diminuée de la valeur de la puissance maximale de fonctionnement du deuxième groupe moto-ventilateur, ladite puissance maximale étant inférieure à la puissance totale de consigne au point de fonctionnement correspondant à la deuxième valeur de seuil;

- en un point de fonctionnement de l'intervalle de valeurs de puissance totale de consigne compris entre les deux valeurs de seuil, la puissance de consigne du premier groupe moto-ventilateur est :

- soit égale à la puissance totale de consigne tandis que le signal de commande du moyen d'interruption est un signal de coupure, dans le cas où ledit point de fonctionnement est atteint alors que le deuxième groupe moto-ventilateur n'est pas alimenté ;

- soit égale à la puissance totale de consigne diminuée de la puissance maximale de fonctionnement du deuxième groupe moto-ventilateur tandis que le signal de commande du moyen d'interruption est un signal d'alimentation, dans le cas où ledit point de fonctionnement est atteint alors que le deuxième groupe moto-ventilateur est alimenté ;
- la puissance correspondant à la première valeur de seuil est comprise entre la puissance maximale de fonctionnement du deuxième groupe moto-ventilateur et la moyenne des puissances maximales des deux groupes moto-ventilateurs ;
- la puissance correspondant à la deuxième valeur de seuil est comprise entre la moyenne des puissances maximales des deux groupes moto-ventilateurs et la puissance maximale de fonctionnement du premier groupe moto-ventilateur;
- le rapport de la puissance correspondant à la première valeur de seuil, sur la puissance maximale de fonctionnement du premier groupe moto-ventilateur est comprise entre 0,65 et 0,75 ;
- le rapport de la puissance correspondant à la deuxième valeur de seuil sur la puissance maximale de fonctionnement du premier groupe moto-ventilateur est comprise entre 0,85 et 0,95 ; et
- la puissance maximale de fonctionnement du deuxième groupe moto-ventilateur est choisie sur une plage de valeurs comprises entre 0,5 et 0,8 fois la puissance maximale de fonctionnement du premier groupe moto-ventilateur .

L'invention vise également un procédé de commande d'un ensemble de ventilation tel que décrit précédemment, dans lequel on réalise les étapes suivantes :

- on compare la puissance totale de consigne à une deuxième valeur de seuil;
- si la puissance totale de consigne est supérieure à ladite deuxième valeur de seuil, on alimente le deuxième groupe moto-ventilateur à sa puissance maximale de fonctionnement, et le premier groupe moto-ventilateur à une puissance égale à la puissance totale de consigne diminuée de la puissance maximale de fonctionnement du deuxième groupe moto-ventilateur ;
- si la puissance totale de consigne est inférieure à la deuxième valeur de seuil, on compare la puissance totale de consigne à une première valeur de seuil;
- si de plus la puissance totale de consigne est inférieure à ladite première valeur de seuil S1, on alimente le premier groupe moto-ventilateur à une puissance égale à la puissance totale de consigne et on n'alimente pas le deuxième groupe moto-ventilateur;
- si au contraire la puissance totale de consigne est supérieure à ladite première valeur de seuil S1,

dans le cas où le deuxième groupe moto-ventilateur n'est pas alimenté, on alimente le premier groupe moto-ventilateur à une puissance égale à la puissance totale de consigne et on n'alimente pas le deuxième groupe moto-ventilateur, et

dans le cas où le deuxième groupe moto-ventilateur est alimenté, on alimente le premier groupe moto-ventilateur à une puissance égale à la puissance totale de consigne diminuée de la puissance maximale de fonctionnement du deuxième groupe moto-ventilateur et on alimente le deuxième groupe moto-ventilateur à sa puissance maximale.

Des exemples de réalisation de l'invention vont maintenant être décrits en regard des dessins annexés, sur lesquels :

- la Figure 1 est un schéma représentant un ensemble de ventilation suivant l'invention ; et
- la Figure 2 est un graphe représentant la puissance aéraulique totale développée par l'ensemble de ventilation, ainsi que les puissances respectives développées par les deux groupes moto-ventilateurs, en fonction de la puissance aéraulique totale de consigne.

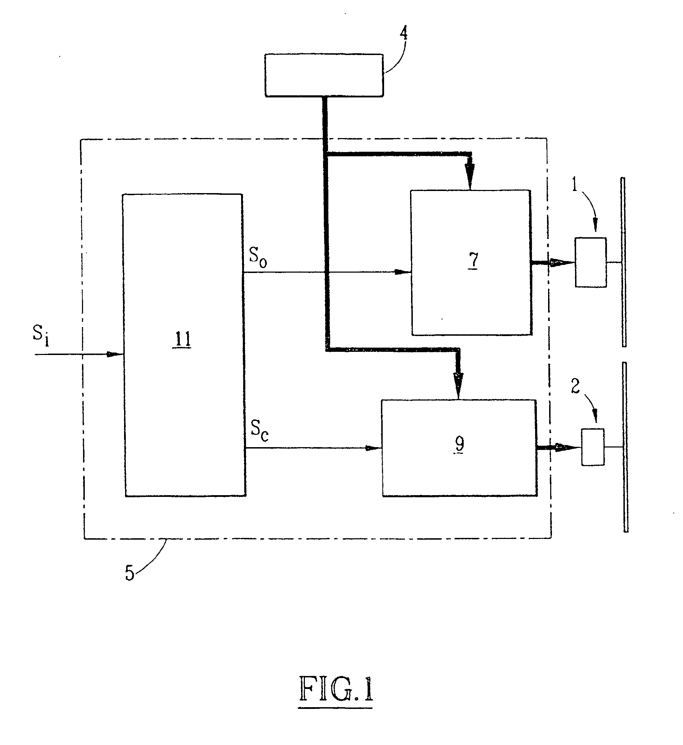

A la Figure 1, on a représenté deux groupes moto-ventilateurs 1, 2 de puissances différentes appartenant à un ensemble de ventilation destiné à équiper un véhicule automobile.

Par exemple, on choisit les deux groupes moto-ventilateurs de façon que leur puissance aéraulique totale disponible soit environ de 160 Watts. Pour cela, on choisit dans le mode de réalisation qui va être décrit, le premier groupe moto-ventilateur 1 tel que sa puissance maximale de fonctionnement soit d'environ 100 Watts, et le deuxième groupe moto-ventilateur 2 tel que sa puissance maximale de fonctionnement soit d'environ 60 Watts.

Les deux groupes moto-ventilateurs 1, 2 sont alimentés par une alimentation électrique 4 disponible sur le véhicule, par l'intermédiaire d'un dispositif de commande 5.

Le dispositif de commande 5 reçoit en entrée un signal de consigne d'entrée $S_i$ significatif d'une puissance aéraulique totale de consigne, cette puissance de consigne étant déterminée par exemple par des paramètres d'état du circuit de refroidissement associés à l'ensemble de ventilation, en particulier des données de température de fluide de refroidissement.

Le dispositif de commande 5 comporte un variateur électronique de puissance 7 associé au premier groupe moto-ventilateur 1 et un interrupteur 9 associé au deuxième groupe moto-ventilateur 2. Le terme interrupteur désigne bien évidemment tout dispositif adapté d'interruption d'alimentation, assujetti à un signal de commande, et peut être constitué par exemple par un relais ou un transistor de puissance.

Le dispositif de commande 5 comporte d'autre part un organe électronique de calcul 11 qui reçoit le signal de consigne d'entrée $S_i$ et délivre en sortie, d'une part un signal de consigne de sortie $S_0$ dirigé vers le variateur 7, et d'autre part un signal de commande $S_C$ de l'interrupteur 9.

Le variateur 7 règle, en fonction du signal de consigne de sortie $S_0$, le niveau de puissance électrique délivré au premier groupe moto-ventilateur 1 par l'alimentation électrique 4.

L'interrupteur 9 autorise ou interdit l'alimentation du deuxième groupe moto-ventilateur 2 par l'alimentation électrique 4, selon que le signal de commande $S_c$ est un signal de coupure ou un signal d'alimentation.

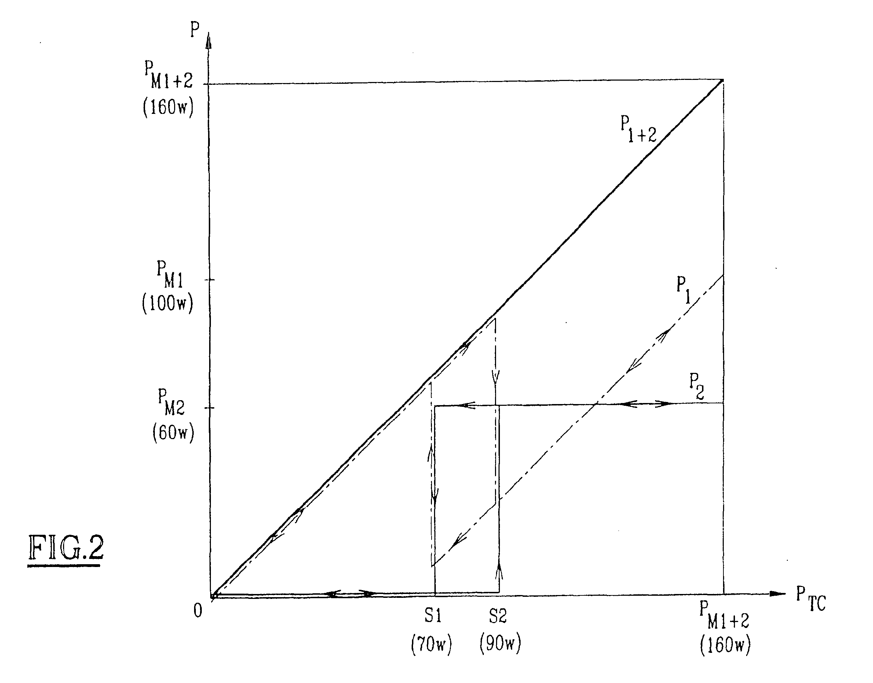

En référence à la Figure 2, on va maintenant décrire le mode de fonctionnement du dispositif de commande 5, et en particulier de l'organe électronique de calcul 11.

On a représenté sur ce graphe l'évolution des puissances développées respectivement par le premier groupe moto-ventilateur 1, le deuxième groupe moto-ventilateur 2, ces puissances étant respectivement désignées par les références $P_1$, $P_2$. La puissance totale développée par l'ensemble formé des deux groupes moto-ventilateurs 1, 2 a été désigné par la référence $P_{1+2}$, et correspond à la somme des puissances respectives $P_1$, $P_2$ des deux groupes moto-ventilateurs pris individuellement. L'évolution des puissances $P_1$, $P_2$, $P_{1+2}$ est représenté en fonction de la puissance totale de consigne $P_{TC}$ qui correspond au signal de consigne $S_i$.

On comprend que le signal de consigne de sortie $S_0$ délivré au variateur 7 par l'organe électronique de calcul 11 est significatif de la puissance $P_1$, et que le signal de commande $S_c$ de l'interrupteur 9 est un signal de type binaire (0 ou 1) significatif de la puissance $P_2$.

Comme on le voit sur le graphe de la Figure 2, on distingue trois plages de fonctionnement correspondant à des intervalles de puissance totale de consigne $P_{TC}$ :

- pour les valeurs de puissance totale de consigne $P_{TC}$ comprises entre 0 et une première valeur de seuil $S_1$, seul le premier groupe moto-ventilateur est mis en fonctionnement. Le signal de commande $S_c$ de l'interrupteur 9 est un signal de coupure, donc la puissance $P_2$ du deuxième groupe moto-ventilateur 2 est nulle. D'autre part, le signal de consigne de sortie $S_0$ délivré au variateur 7 correspond à une puissance $P_1$ égale à la puissance totale de consigne $P_{TC}$. Sur cette plage de fonctionnement, il y a donc identité entre la puissance de l'ensemble $P_{1+2}$ et la puissance du premier groupe moto-ventilateur $P_1$ ;
- pour des valeurs de puissance totale de consigne $P_{TC}$ comprises entre une deuxième valeur de seuil $S_2$, supérieure à la première valeur de seuil $S_1$, et la puissance maximale de fonctionnement de l'ensemble $P_{M1+2}$, égale à la somme des puissances maximales de fonctionnement respectives des deux groupes moto-ventilateurs $P_{M1}$ et $P_{M2}$, le signal de commande $S_C$ de l'interrupteur 9 est un signal d'alimentation. La puissance $P_2$ du deuxième groupe moto-ventilateur 2 est donc amenée à sa puissance maximale de fonctionnement $P_{M2}$, tandis que le signal de consigne de sortie $S_0$ règle le variateur 7 de telle façon que la puissance $P_1$ du premier groupe moto-ventilateur soit égale à la puissance totale de consigne $P_{TC}$ diminuée de la puissance maximale de fonctionnement $P_{M2}$ du deuxième groupe moto-ventilateur ;

- pour des valeurs de puissance totale de consigne $P_{TC}$ comprises entre les deux valeurs de seuil $S_1$ et $S_2$, on distingue deux cas. -Lorsque l'on passe d'un point de fonctionnement initial au point de fonctionnement correspondant à la consigne, on détermine les puissances respectives de consigne des deux groupes moto-ventilateurs en fonction de l'état initial, c'est-à-dire que l'organe électronique de calcul 11 délivre un signal de commande $S_C$ à l'interrupteur 9 qui tient compte de l'état initial dudit interrupteur 9.

En l'occurrence, si le deuxième groupe moto-ventilateur est alimenté à l'état initial, le signal de commande $S_C$ de l'interrupteur 9 au point de fonctionnement est un signal d'alimentation. De ce fait, la puissance $P_2$ du deuxième groupe moto-ventilateur 2 est maintenue à sa puissance maximale de fonctionnement $P_{M2}$, tandis que la puissance $P_1$ du premier groupe moto-ventilateur 1 est réglée à la puissance totale de consigne $P_{TC}$ diminuée de la puissance maximale de fonctionnement $P_{M2}$ du deuxième groupe moto-ventilateur.

Si au contraire, le deuxième groupe moto-ventilateur 2 n'est pas alimenté à l'état initial, le signal de commande $S_C$ de l'interrupteur 9 reste un signal de coupure et la puissance $P_2$ du deuxième groupe moto-ventilateur reste nulle, la puissance $P_1$ du premier groupe moto-ventilateur étant égale à la puissance totale de consigne $P_{TC}$.

Chacun des deux groupes moto-ventilateurs 1, 2 fonctionne donc suivant un cycle à hystérésis dont les seuils de déclenchement $S_1$, $S_2$ sont identiques pour l'un et l'autre.

Ce type de fonctionnement évite des cycles trop courts de déclenchement/coupure des groupes moto-ventilateurs, qui se produiraient dans le cas d'un seuil unique lorsque la puissance totale de consigne varie autour de cette valeur de seuil.

Les valeurs de seuil $S_1$, $S_2$ sont pré-enregistrées dans l'organe électronique de calcul 11 et peuvent être soit fixes, soit réglables, selon que l'organe de calcul soit prévu pour des utilisations avec différents types de groupes moto-ventilateurs ou limité à une configuration unique.

On estime qu'il est préférable de choisir les valeurs de seuil $S_1$ et $S_2$ respectivement dans les intervalles compris d'une part entre la puissance maximale du deuxième groupe moto-ventilateur $P_{M2}$ et la moyenne des deux puissances maximales, à savoir

$$\frac{P_{M1} + P_{M2}}{2} \, ,$$ et d'autre part entre cette même

moyenne $\dfrac{P_{M1} + P_{M2}}{2}$ et la puissance maximale du premier groupe moto-ventilateur $P_{M1}$.

Pour obtenir une bonne fiabilité de l'ensemble de ventilation, il est nécessaire de réduire autant que possible la répétition des déclenchements et coupures du deuxième groupe moto-ventilateur. Pour cela, on choisit des valeurs de seuils de déclenchement $S_1$, $S_2$ suffisamment écartées, étant évident que la première valeur de seuil $S_1$ doit être supérieure à la puissance maximale de fonctionnement $P_{M2}$ du deuxième groupe moto-ventilateur, et que la deuxième valeur de seuil $S_2$ doit être inférieure à la puissance maximale de fonctionnement $P_{M1}$ du premier groupe moto-ventilateur 1.

Par exemple, on prendra des valeurs de seuil $S_1$, $S_2$ respectivement égales à 70 Watts et 90 Watts.

Plus généralement, on estime que le fonctionnement de l'ensemble de ventilation est optimal pour une première valeur de seuil $S_1$ comprise entre 0,65 et 0,75 fois la puissance maximale de fonctionnement $P_{M1}$ du premier groupe moto-ventilateur, et pour une deuxième valeur de seuil $S_2$ comprise entre 0,85 et 0,95 fois la puissance maximale de fonctionnement $P_{M1}$ du premier groupe moto-ventilateur 1.

Il va de soi que les valeurs de puissance maximale de fonctionnement des deux groupes moto-ventilateurs n'ont été données qu'à titre indicatif, et que l'invention peut s'appliquer quelle que soit la puissance totale maximale et sa répartition sur les deux groupes moto-ventilateurs, aux conditions préalables mentionnées précédemment.

Cependant, il est préférable d'associer deux groupes moto-ventilateurs fonctionnant dans des domaines permettant de les solliciter de façon équilibrée pendant les phases d'utilisation les plus courantes, tout en limitant les cycles de coupure/alimentation.

Pour cela, on estime que le rapport de la puissance maximale de fonctionnement du deuxième groupe moto-ventilateur sur la puissance maximale de fonctionnement du premier groupe moto-ventilateur peut avantageusement être choisi entre 0,5 et 0,8.

Comme cela a déjà été mentionné précédemment, il peut être nécessaire de prévoir des valeurs de seuil $S_1$, $S_2$ réglables. Un tel réglage peut être effectué par simple programmation de l'organe électronique de calcul 11, ce qui rend le dispositif de commande 5 et plus généralement l'ensemble de ventilation suivant l'invention adaptables à de nombreux cas de figures et à de nombreux véhicules. L'adaptation peut viser différents types de groupes moto-ventilateurs, mais également divers types de moteur de véhicule, de circuit de refroidissement ou autres équipements présents sur les véhicules.

Comme on le voit, l'invention nécessite un nombre relativement faible de composants, de type classique, qui représentent un encombrement faible permettant d'intégrer le dispositif de commande 5 à l'un des deux groupes moto-ventilateurs. De ce fait, on peut éviter toute transmission de courant haute fréquence entre les deux groupes moto-ventilateurs.

D'autre part, le dispositif de commande peut fonctionner même si un seul groupe moto-ventilateur est monté, ce qui procure une grande souplesse d'utilisation et permet d'adapter le dispositif de commande à un grand nombre de véhicules différents. Dans ce cas, l'interrupteur 9 n'est pas utilisé.

On remarquera également que le fonctionnement par cycle à hystérésis des deux groupes moto-ventilateurs procure une stabilité de fonctionnement et de ce fait une grande fiabilité.

## Revendications

1. Ensemble de ventilation pour véhicule automobile comprenant des premier et deuxième groupes moto-ventilateurs (1, 2) à alimentation électrique présentant chacun une puissance maximale de fonctionnement ($P_{M1}$, $P_{M2}$) respective, et un dispositif de commande (5) adapté pour faire varier la puissance aéraulique ($P_{1+2}$) développée par l'ensemble formé par les deux groupes moto-ventilateurs (1, 2) en fonction d'une valeur de consigne de puissance totale ($P_{TC}$), **caractérisé en ce que** le dispositif de commande (5) comporte un variateur de puissance électrique (7) à variation de puissance continue, relié au premier groupe moto-ventilateur (1), et un moyen (9) d'interruption d'alimentation du deuxième groupe moto-ventilateur (2), la puissance développée ($P_2$) par ledit deuxième groupe moto-ventilateur (2) étant soit nulle soit égale à sa puissance maximale de fonctionnement ($P_{M2}$).

2. Ensemble de ventilation suivant la revendication 1, **caractérisé en ce que** le dispositif de commande (5) comporte un organe électronique de calcul (11) qui reçoit en entrée un signal de consigne d'entrée ($S_i$) significatif de la puissance aéraulique totale de consigne ($P_{TC}$), et délivre en sortie, d'une part un signal de consigne de sortie ($S_0$) au variateur (7), significatif de la puissance aéraulique de consigne du premier groupe moto-ventilateur (1), et d'autre part un signal de commande ($S_C$) au moyen d'interruption (9), significatif de l'état de consigne du deuxième groupe moto-ventilateur (2), la somme de la puissance de consigne du premier groupe moto-ventilateur (1) et de la puissance ($P_2$) développée par le deuxième groupe moto-ventilateur (2) étant égale à la puissance totale de consigne ($P_{TC}$).

**3.** Ensemble de ventilation suivant la revendication 2, **caractérisé en ce que** sur une plage de fonctionnement à bas régime, correspondant à des valeurs de puissance totale de consigne ($P_{TC}$) inférieures à une première valeur de seuil (S1) prédéterminée, la puissance de consigne du premier groupe moto-ventilateur (1) est égale à la puissance totale de consigne ($P_{TC}$), tandis que le signal de commande ($S_C$) du moyen d'interruption (9) est un signal de coupure, la puissance maximale de fonctionnement ($P_{M1}$) du premier groupe moto-ventilateur (1) étant supérieure à la puissance aéraulique correspondant à la première valeur de seuil (S1).

**4.** Ensemble de ventilation suivant la revendication 3, **caractérisé en ce que** sur une plage de fonctionnement à haut régime, correspondant à des valeurs de puissance totale de consigne ($P_{TC}$) supérieures à une deuxième valeur de seuil (S2) prédéterminée, le signal de commande ($S_C$) du moyen d'interruption (9) est un signal d'alimentation, tandis que la puissance de consigne du premier groupe moto-ventilateur (1) est égale à la puissance totale de consigne ($P_{TC}$) diminuée de la valeur de la puissance maximale de fonctionnement ($P_{M2}$) du deuxième groupe moto-ventilateur (2), ladite puissance maximale étant inférieure à la puissance totale de consigne ($P_{TC}$) au point de fonctionnement correspondant à la deuxième valeur de seuil (S2).

**5.** Ensemble de ventilation suivant la revendication 4, **caractérisé en ce qu'**en un point de fonctionnement de l'intervalle de valeurs de puissance totale de consigne ($P_{TC}$) compris entre les deux valeurs de seuil (S1, S2), la puissance de consigne du premier groupe moto-ventilateur (1) est :

    - soit égale à la puissance totale de consigne ($P_{TC}$) tandis que le signal de commande ($S_C$) du moyen d'interruption (9) est un signal de coupure, dans le cas où ledit point de fonctionnement est atteint alors que le deuxième groupe moto-ventilateur (2) n'est pas alimenté ;
    - soit égale à la puissance totale de consigne ($P_{TC}$) diminuée de la puissance maximale de fonctionnement ($P_{M2}$) du deuxième groupe moto-ventilateur (2) tandis que le signal de commande ($S_C$) du moyen d'interruption (9) est un signal d'alimentation, dans le cas où ledit point de fonctionnement est atteint alors que le deuxième groupe moto-ventilateur (2) est alimenté.

**6.** Ensemble de ventilation suivant l'une quelconque des revendications 3 à 5, **caractérisé en ce que** la puissance correspondant à la première valeur de seuil ($S_1$) est comprise entre la puissance maximale de fonctionnement ($P_{M2}$) du deuxième groupe moto-ventilateur (2) et la moyenne ($\dfrac{P_{M1}+P_{M2}}{2}$) des puissances maximales ($P_{M1}$, $P_{M2}$) des deux groupes moto-ventilateurs (1, 2).

**7.** Ensemble de ventilation suivant la revendication 4, **caractérisé en ce que** la puissance correspondant à la deuxième valeur de seuil ($S_2$) est comprise entre la moyenne ($\dfrac{P_{M1}+P_{M2}}{2}$) des puissances maximales ($P_{M1}$, $P_{M2}$) des deux groupes moto-ventilateurs (1, 2) et la puissance maximale de fonctionnement ($P_{M1}$) du premier groupe moto-ventilateur (1).

**8.** Ensemble de ventilation suivant l'une quelconque des revendications 3 à 7, **caractérisé en ce que** le rapport de la puissance correspondant à la première valeur de seuil (S1), sur la puissance maximale de fonctionnement ($P_{M1}$) du premier groupe moto-ventilateur (1) est comprise entre 0,65 et 0,75.

**9.** Ensemble de ventilation suivant la revendication 4 ou 7, **caractérisé en ce que** le rapport de la puissance correspondant à la deuxième valeur de seuil (S2) sur la puissance maximale de fonctionnement ($P_{M1}$) du premier groupe moto-ventilateur (1) est comprise entre 0,85 et 0,95.

**10.** Ensemble de ventilation suivant l'une quelconque des revendications 3 à 9, **caractérisé en ce que** la puissance maximale de fonctionnement ($P_{M2}$) du deuxième groupe moto-ventilateur (2) est choisie sur une plage de valeurs comprises entre 0,5 et 0,8 fois la puissance maximale de fonctionnement ($P_{M1}$) du premier groupe moto-ventilateur (1).

**11.** Procédé de commande d'un ensemble de ventilation suivant l'une quelconque des revendications 1 à 10, **caractérisé en ce qu'**il comprend les étapes suivantes :

    - on compare la puissance totale de consigne ($P_{TC}$) à une deuxième valeur de seuil (S2) ;
    - si la puissance totale de consigne ($P_{TC}$) est supérieure à ladite deuxième valeur de seuil (S2), on alimente le deuxième groupe moto-ventilateur (2) à sa puissance maximale de fonctionnement ($P_{M2}$), et le premier groupe moto-ventilateur (1) à une puissance égale à la puissance totale de consigne ($P_{TC}$) diminuée de la puissance maximale de fonctionnement ($P_{M2}$) du deuxième groupe moto-ventilateur (2);

- si la puissance totale de consigne ($P_{TC}$) est inférieure à la deuxième valeur de seuil (S2), on compare la puissance totale de consigne ($P_{TC}$) à une première valeur de seuil (S1) ;
- si de plus la puissance totale de consigne ($P_{TC}$) est inférieure à ladite première valeur de seuil S1, on alimente le premier groupe moto-ventilateur (1) à une puissance égale à la puissance totale de consigne ($P_{TC}$) et on n'alimente pas le deuxième groupe moto-ventilateur (2);
- si au contraire la puissance totale de consigne ($P_{TC}$) est supérieure à ladite première valeur de seuil (S1),

dans le cas où le deuxième groupe moto-ventilateur (2) n'est pas alimenté, on alimente le premier groupe moto-ventilateur (1) à une puissance égale à la puissance totale de consigne ($P_{TC}$) et on n'alimente pas le deuxième groupe moto-ventilateur (2), et dans le cas où le deuxième groupe moto-ventilateur (2) est alimenté, on alimente le premier groupe moto-ventilateur (1) à une puissance égale à la puissance totale de consigne ($P_{TC}$) diminuée de la puissance maximale de fonctionnement ($P_{M2}$) du deuxième groupe moto-ventilateur (2) et on alimente le deuxième groupe moto-ventilateur (2) à sa puissance maximale ($P_{M2}$) .

**Claims**

1. Fan arrangement for an automotive vehicle, comprising first and second electrically supplied motor-fan groups (1, 2), each having a respective maximum operating power ($P_{M1}$, $P_{M2}$), and a control device (5) arranged to cause the air flow power ($P_{1+2}$) developed by the arrangement formed by the two motor-fan groups (1, 2) to vary as a function of a desired value of total power ($P_{TC}$), **characterised in that** the control device (5) includes an electric power varying means (7), having continuous power variation, which is connected to the first motor-fan group (1) and a means (9) for interrupting the supply to the second motor-fan group (2), the power ($P_2$) developed by said second motor-fan group (2) being either zero or equal to its maximum operating power ($P_{M2}$).

2. Fan arrangement according to claim 1, **characterised in that** the control device (5) includes an electronic calculation means (11) which receives, as input, an input desired value signal ($S_i$) indicative of the desired total air flow power ($P_{TC}$) and which delivers, as output, on the one hand an output desired value signal ($S_o$) to the varying means (7) indicative of the desired air flow power for the first motor-fan group (1) and on the other hand a control signal ($S_C$) to the interrupting means (9) indicative of the desired state of the second motor-fan group (2), the sum of the desired power for the first motor-fan group (1) and the power ($P_2$) developed by the second motor-fan group (2) being equal to the desired total power ($P_{TC}$).

3. Fan arrangement according to claim 2, **characterised in that** over a low-duty operating range, corresponding to desired values of total power ($P_{TC}$) less than a first predetermined threshold value (S1), the desired power for the first motor-fan group (1) is equal to the desired total power ($P_{TC}$), while the control signal ($S_C$) of the interrupting means (9) is a supply OFF signal, the maximum operating power ($P_{M1}$) of the first motor-fan group (1) being greater than the air flow power corresponding to the first threshold value (S1).

4. Fan arrangement according to claim 3, **characterised in that** over a high-duty operating range, corresponding to desired values of total power ($P_{TC}$) greater than a second predetermined threshold value (S2), the control signal ($S_C$) of the interrupting means (9) is a supply ON signal, while the desired power for the first motor-fan group (1) is equal to the desired total power ($P_{TC}$) less the value of the maximum operating power ($P_{M2}$) of the second motor-fan group (2), said maximum power being less than the desired total power ($P_{TC}$) at the operating point corresponding to the second threshold value (S2).

5. Fan arrangement according to claim 4, **characterised in that** at an operating point in the interval of desired values of total power ($P_{TC}$) included between the two threshold values (S1, S2), the desired power for the first motor-fan group (1) is:

- either equal to the desired total power ($P_{TC}$) while the control signal ($S_C$) of the interrupting means (9) is a supply OFF signal, in the case where said operating point is reached when the second motor-fan group (2) is not being supplied;
- or equal to the desired total power ($P_{TC}$) less the maximum operating power ($P_{M2}$) of the second motor-fan group (2) while the control signal ($S_c$) of the interrupting means (9) is a supply ON signal, in the case where said operating point is reached when the second motor-fan group (2) is being supplied.

6. Fan arrangement according to any one of claims 3 to 5, **characterised in that** the power corresponding to the first threshold value ($S_1$) is included between the maximum operating power ($P_{M2}$) of the second motor-fan group (2) and the mean $(\frac{P_{M1}+P_{M2}}{2})$

of the maximum powers ($P_{M1}$, $P_{M2}$) of the two motor-fan groups (1, 2).

7. Fan arrangement according to claim 4, **characterised in that** the power corresponding to the second threshold value ($S_2$) is included between the mean

$$( \frac{P_{M1} + P_{M2}}{2} )$$ of the maximum powers ($P_{M1}$, $P_{M2}$) of the two motor-fan groups (1, 2) and the maximum operating power ($P_{M1}$) of the first motor-fan group (1).

8. Fan arrangement according to any one of claims 3 to 7, **characterised in that** the ratio of the power corresponding to the first threshold value (S1) to the maximum operating power ($P_{M1}$) of the first motor-fan group (1) is included between 0.65 and 0.75.

9. Fan arrangement according to claim 4 or 7, **characterised in that** the ratio of the power corresponding to the second threshold value (S2) to the maximum operating power ($P_{M1}$) of the first motor-fan group (1) is included between 0.85 and 0.95.

10. Fan arrangement according to any one of claims 3 to 9, **characterised in that** the maximum operating power ($P_{M2}$) of the second motor-fan group (2) is selected from a range of values included between 0.5 and 0.8 times the maximum operating power ($P_{M1}$) of the first motor-fan group (1).

11. Method of controlling a fan arrangement according to any one of claims 1 to 10, **characterised in that** it comprises the following steps:

- the desired total power ($P_{TC}$) is compared to a second threshold value (S2);
- if the desired total power ($P_{TC}$) is greater than said second threshold value (S2) the second motor-fan group (2) is supplied at its maximum operating power ($P_{M2}$), and the first motor-fan group (1) at a power equal to the desired total power ($P_{TC}$) less the maximum operating power ($P_{M2}$) of the second motor-fan group (2);
- if the desired total power ($P_{TC}$) is less than the second threshold value (S2), the desired total power ($P_{TC}$) is compared to a first threshold value (S1);
- if the desired total power ($P_{TC}$) is also less than said first threshold value S1, the first motor-fan group (1) is supplied at a power equal to the desired total power ($P_{TC}$) and the second motor-fan group (2) is not supplied;
- if, on the contrary, the desired total power ($P_{TC}$) is greater than said first threshold value (S1),

in the case where the second motor-fan group (2) is not being supplied, the first motor-fan group (1) is supplied at a power equal to the desired total power ($P_{TC}$) and the second motor-fan group (2) is not supplied and,

in the case where the second motor-fan group (2) is being supplied, the first motor-fan group (1) is supplied at a power equal to the desired total power ($P_{TC}$) less the maximum operating power ($P_{M2}$) of the second motor-fan group (2) and the second motor-fan group (2) is supplied at its maximum power ($P_{M2}$).

**Patentansprüche**

1. Lüfteranordnung für ein Kraftfahrzeug, umfassend eine erste und eine zweite elektrisch betriebene Motor-Lüftereinheit (1, 2), die jeweils maximale Betriebsleistungen ($P_{M1}$, $P_{M2}$) aufweisen, und eine Steuereinheit (5), eingerichtet zum Variieren der Lüftungsleistung ($P_{1+2}$), die von der Anordnung aus den beiden Motor-Lüftereinheiten (1, 2) in Abhängigkeit eines Sollwertes der Gesamtleistung ($P_{TC}$) erbracht wird, **dadurch gekennzeichnet, dass** die Steuereinheit (5) eine elektrische Leistungs-Stelleinrichtung (7) zur kontinuierlichen Leistungsvariation aufweist, die mit der ersten Motor-Lüftereinheit (1) verbunden ist, und Mittel (9) aufweist zur Unterbrechung der Leistungszufuhr an die zweite Motor-Lüftereinheit (2) aufweist, wobei die entwickelte Leistung ($P_2$) der besagten zweiten Motor-Lüftereinheit (2) entweder Null ist oder gleich der maximalen Betriebsleistung ($P_{M2}$).

2. Lüfteranordnung nach Anspruch 1, **dadurch gekennzeichnet, dass** die Steuereinheit (5) eine elektronische Recheneinheit (11) aufweist, die an einem Eingang ein Sollwertsignal ($S_i$), das die Soll-Lüftungsgesamtleistung ($P_{TC}$) angibt, empfängt und an einem Ausgang zum einen ein Ausgangssignal ($S_0$) an die Leistungs-Stelleinrichtung (7) abgibt, das die Soll-Lüftungsleistung der ersten Motor-Lüftereinheit (1) angibt und zum anderen ein Steuersignal ($S_c$) an die Unterbrechungsmittel (9) abgibt, das den Soll-Zustands der zweiten Motor-Lüftereinheit (2) angibt, derart, dass die Summe der Soll-Leistung der ersten Motor-Lüftereinheit (1) und der von der zweiten Motor-Lüftereinheit (2) entwikkelten Leistung ($P_2$) gleich der Soll-Gesamtleistung ($P_{TC}$) ist.

3. Lüfteranordnung nach Anspruch 2, **dadurch gekennzeichnet, dass** in einem unteren Arbeitsbereich, der einer Soll-Gesamtleistung ($P_{TC}$) unterhalb eines ersten Schwellenwertes ($S_1$) entspricht, die Soll-Leistung der ersten Motor-Lüftereinheit (1) gleich der Soll-Gesamtleistung ($P_{TC}$) ist, wohingegen das Steuersignal ($S_c$) für das Unterbrechungsmittel (9) ein Abschaltungssignal ist, wobei die maximale Betriebsleistung ($P_{M1}$) der ersten Motor-Lüftereinheit (1) größer ist als die Lüftungsleistung, die dem ersten Schwellenwert ($S_1$) entspricht.

4. Lüftereinheit nach Anspruch 3, **dadurch gekennzeichnet, dass** in einem oberen Arbeitsbereich, der einer Soll-Gesamtleistung ($P_{TC}$) oberhalb eines zweiten Schwellenwertes ($S_2$) entspricht, das Steuersignal ($S_c$) für das Unterbrechungsmittel (9) ein Versorgungssignal ist, wohingegen die Soll-Leistung der ersten Motor-Lüftereinheit (1) gleich der Soll-Gesamtleistung ($P_{TC}$) abzüglich des Wertes der maximalen Betriebsleistung ($P_{M2}$) der zweiten Motor-Lüftereinheit (2) ist, wobei besagte Maximalleistung geringer ist als die Soll-Gesamtleistung ($P_{TC}$) an dem Arbeitspunkt, der dem zweiten Schwellenwert ($S_2$) entspricht.

5. Lüftereinheit nach Anspruch 4, **dadurch gekennzeichnet, dass** an einem Arbeitspunkt in einem Bereich, der Werte der Soll-Gesamtleistung ($P_{TC}$) zwischen den Schwellenwerten ($S_1$, $S_2$) umfasst, für die Soll-Leistung der ersten Motor-Lüftereinheit (1) gilt:

- sie ist gleich der Soll-Gesamtleistung ($P_{TC}$) während das Steuersignal ($S_c$) für das Unterbrechungsmittel (9) ein Unterbrechungssignal ist, falls der Arbeitspunkt erreicht wird, wenn die zweite Motor-Lüftereinheit (2) nicht versorgt wird;
- sie ist gleich der Soll-Gesamtleistung ($P_{TC}$) abzüglich der maximalen Betriebsleistung ($P_{M2}$) der zweiten Motor-Lüftereinheit (2) während das Steuersignal ($S_c$) für die Unterbrechungsmittel (9) ein Versorgungssignal ist, falls der Arbeitspunkt erreicht wird, wenn die zweite Motor-Lüftereinheit (2) versorgt wird.

6. Lüfteranordnung nach einem der Ansprüche 3 bis 5, **dadurch gekennzeichnet, dass** die dem ersten Schwellenwert ($S_1$) entsprechende Leistung zwischen der maximalen Betriebsleistung ($P_{M2}$) der zweiten Motor-Lüftereinheit (2) und dem Mittelwert

$$\left( \frac{P_{M1} + P_{M2}}{2} \right)$$ der maximalen Leistungen ($P_{M1}$, $P_{M2}$) der beiden Motor-Lüftereinheiten (1, 2) liegt.

7. Lüftereinheit nach Anspruch 4, **dadurch gekennzeichnet, dass** die dem zweiten Schwellenwert ($S_2$) entsprechende Leistung zwischen dem Mittelwert

$$\left( \frac{P_{M1} + P_{M2}}{2} \right)$$ der maximalen Leistungen ($P_{M1}$, $P_{M2}$) der beiden Motor-Lüftereinheiten (1,2) und der maximalen Betriebsleistung ($P_{M1}$) der ersten Motor-Lüftereinheit (1) liegt.

8. Lüftereinheit nach einem der Ansprüche 3 bis 7, **dadurch gekennzeichnet, dass** das Verhältnis der dem ersten Schwellenwert ($S_1$) entsprechenden Leistung zu der maximalen Betriebsleistung ($P_{M1}$) der ersten Motor-Lüftereinheit zwischen 0,65 und 0,75 liegt.

9. Lüftereinheit nach einem der Ansprüche 4 oder 7, **dadurch gekennzeichnet, dass** das Verhältnis der dem zweiten Schwellenwert ($S_2$) entsprechenden Leistung zu der maximalen Betriebsleistung ($P_{M1}$) der ersten Motor-Lüftereinheit (1) zwischen 0,85 und 0,95 liegt.

10. Lüftereinheit nach einem der Ansprüche 3 bis 9, **dadurch gekennzeichnet, dass** die maximale Betriebsleistung ($P_{M2}$) der zweiten Motor-Lüftereinheit (2) aus einem Bereich der 0,5 bis 0,8-fachen maximalen Betriebsleistung ($P_{M1}$) der ersten Motor-Lüftereinheit (1) ausgewählt ist.

11. Verfahren zum Steuern einer Lüfteranordnung nach einem der Ansprüche 1 bis 10, **dadurch gekennzeichnet, dass** es die folgenden Schritte umfasst:

- vergleichen der Soll-Gesamtleistung ($P_{TC}$) mit einem zweiten Schwellenwert ($S_2$);
- falls die Soll-Gesamtleistung ($P_{TC}$) größer ist als der zweite Schwellenwert ($S_2$), betreiben der zweiten Motor-Lüftereinheit (2) mit ihrer maximalen Betriebsleistung ($P_{M2}$) und der ersten Motor-Lüftereinheit (1) mit einer Leistung, die der Soll-Gesamtleistung ($P_{TC}$) abzüglich der maximalen Betriebsleistung ($P_{M2}$) der zweiten Motor-Lüftereinheit (2) entspricht;
- falls die Soll-Gesamtleistung ($P_{TC}$) kleiner ist als der zweite Schwellenwert ($S_2$), vergleichen der Soll-Gesamtleistung ($P_{TC}$) mit einem ersten Schwellenwert ($S_1$);
- falls zusätzlich die Soll-Gesamtleistung ($P_{TC}$) kleiner ist als besagter erster Schwellenwert ($S_1$), versorgen der ersten Motor-Lüftereinheit (1) mit einer Leistung gleich der Soll-Gesamtleistung ($P_{TC}$) und nicht versorgen der zweiten Motor-Lüftereinheit (2);
- falls dagegen die Soll- Gesamtleistung ($P_{TC}$) größer ist als besagter erster Schwellenwert ($S_1$),

für den Fall, dass die zweite Motor-Lüftereinheit (2) nicht versorgt wird, versorgen der ersten Motor-Lüftereinheit (1) mit einer Leistung gleich der Soll-Gesamtleistung ($P_{TC}$) und nicht versorgen der zweiten Motor-Lüftereinheit (2) und

für den Fall, dass die zweite Motor-Lüftereinheit (2) versorgt wird, versorgen der ersten Motor-Lüftereinheit (1) mit einer Leistung gleich der Soll-Gesamtleistung ($P_{TC}$) abzüglich der maximalen Betriebsleistung ($P_{M2}$) der zweiten Motor-Lüftereinheit (2) und versorgen der zweiten Motor-Lüftereinheit (2) mit ihrer maximalen Leistung ($P_{M2}$).

$$\underline{FIG.1}$$

FIG.2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5483927 A